# EUROPEAN PATENT APPLICATION

(11) **EP 2 578 813 A1**
(43) Date of publication of application: **10.04.2013**
(21) Application number: 12183928.6
(22) Date of filing: 11.09.2012
(51) Int. Cl.: F01D 25/28, F02K 3/06, F02C 7/20, F01D 25/24

(54) **Strut rods for structural guide vanes**

(30) Priority: 03.10.2011 US 201113251502
(71) Applicant: United Technologies Corporation, Hartford, CT 06101 (US)
(72) Inventor: Maalouf, Fadi S., East Hampton, CT Connecticut 06424 (US); Ditomasso, John C., Glastonbury, CT Connecticut 06033 (US)
(74) Representative: Tomlinson, Kerry John

(57) **Abstract**

A reinforced structural guide vane system includes an outer casing (32); a center body (34) within the outer casing; a plurality of structural guide vanes (28) extending between and connected to the center body and the outer casing; and a plurality of strut rods (30) extending between and connected to the outer casing and the center body.

## Description

### BACKGROUND

Gas turbine engines (or combustion turbines) are built around a center body, holding a power core made up of a compressor, combustor and turbine, arranged in flow series with an upstream inlet and downstream exhaust. The compressor compresses air from the inlet, which is mixed with fuel in the combustor and ignited to generate hot combustion gas. The turbine extracts energy from the expanding combustion gas, and drives the compressor via a common shaft. Energy is delivered in the form of rotational energy in the shaft, reactive thrust from the exhaust, or both.

A fan section pulls air into the engine, and is surrounded by an outer fan casing which defines an air flow path. The outer casing must be structurally connected to the center body. This connection can be made with aerodynamic vanes that are called structural guide vanes because they provide the structural connection between the outer casing and the center body. These structural guide vanes can turn and straighten swirling air after it passes through the fan rotor.

Turbofan engines are commonly divided into high and low bypass configurations. High bypass turbofans generate thrust primarily from the fan, which drives airflow through a bypass duct oriented around the engine core. This design is common on commercial aircraft and military transports, where noise and fuel efficiency are primary concerns. Low bypass turbofans generate proportionally more thrust from the exhaust flow, providing greater specific thrust for use on supersonic fighters and other high-performance aircraft. Unducted (open rotor) turbofans and ducted turboprop configurations are also known, as are a variety of counter-rotating and aft-mounted designs.

Turbofan engine performance depends on precise control of the working fluid flow. Because engine noise is a factor, however, particularly for aviation applications, there are competing engineering challenges for both fan and compressor design.

### SUMMARY

A reinforced structural guide vane system includes an outer casing; a center body within the outer casing; a plurality of structural guide vanes extending between and connected to the center body and the outer casing; and a plurality of strut rods extending between and connected to the outer casing and to the center body.

### BRIEF DESCRIPTION OF THE DRAWINGS

FIG. 1 is a cross-sectional view of a gas turbine engine with strut rods according to an embodiment of the current invention.

FIG. 2A is a perspective view of structural members of a fan exit case with structural guide vanes and strut rods from a front side.

FIG. 2B is a view of FIG. 2A with the structural guide vanes removed.

FIG. 3 is a perspective view of a back side of a second embodiment of a fan exit case with structural guide vanes and strut rods.

FIG. 4 is a perspective view of a back side of a third embodiment of a fan exit case with structural guide vanes and strut rods.

### DETAILED DESCRIPTION

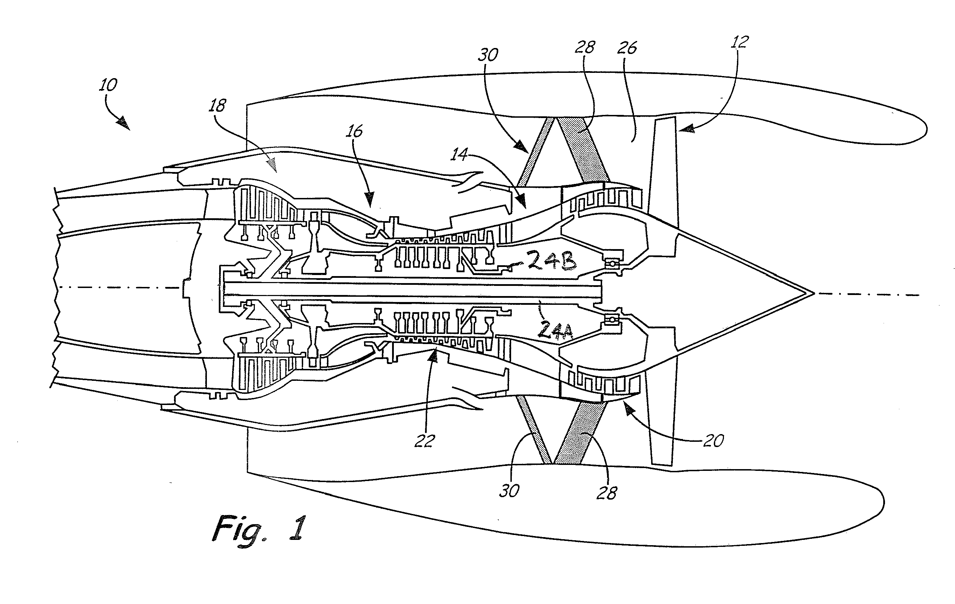

FIG. 1 is a cross-sectional view of gas turbine engine 10, which includes turbofan 12, compressor section 14, combustion section 16 and turbine section 18. Compressor section 14 includes low-pressure compressor 20 and high-pressure compressor 22. Engine 10 also includes bypass section 26 with structural guide vanes 28 and strut rods 30 extending between outer casing 32 and center body 34. Center body 34 houses compressor section 14, combustion section 16 and turbine section 18.

Air is taken in through fan 12 as fan 12 spins. A portion of the inlet air is directed to compressor section 14 where it is compressed by a series of rotating blades and stationary vanes. The compressed air is mixed with fuel, and then ignited in combustor section 16. The combustion exhaust is directed to turbine section 18. Blades and vanes in turbine section 18 extract kinetic energy from the exhaust to turn inner (low spool) shaft 24A, which drives low pressure compressor 20 and turbofan 12, and outer shaft 24B which drives high pressure compressor 22.

The portion of inlet air that is taken in through fan 12 and not directed through compressor section 14 is bypass air. When fan 12 spins, it creates pressure and imparts swirl into the air. Guide vanes 28 act to slow down and straighten the air, increasing static pressure and creating thrust.

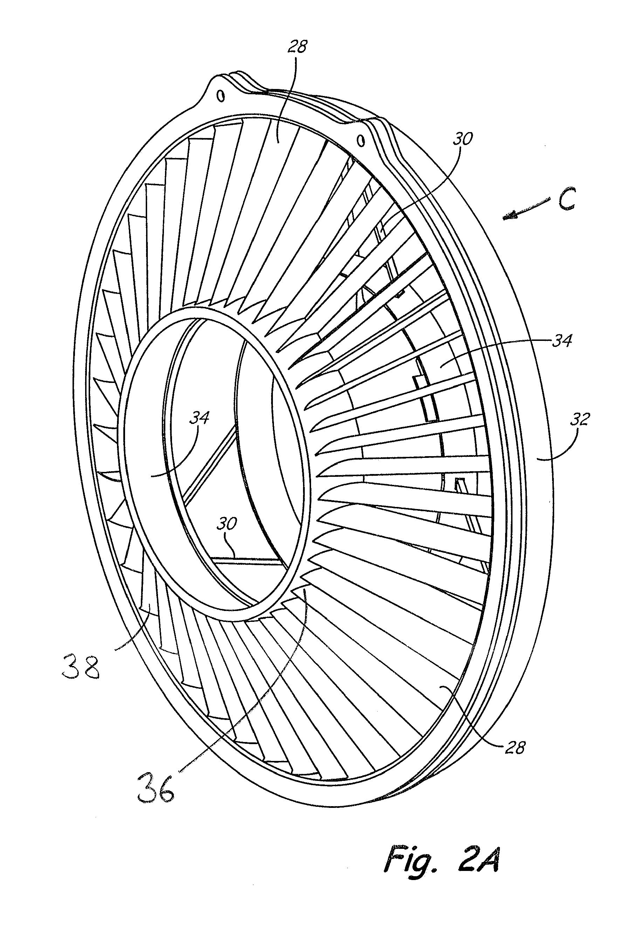

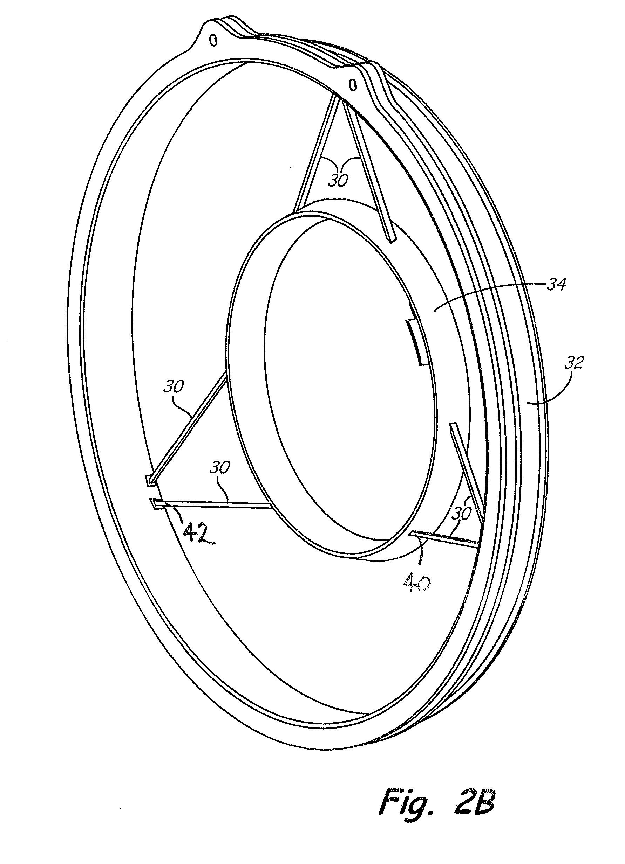

FIG. 2A is a front perspective view of structural members of fan exit case C with structural guide vanes 28 and strut rods 30. FIG. 2B is a view similar to FIG. 2A, but with the structural guide vanes 28 removed. FIGS. 2A and 2B show outer casing 32, structural guide vanes 28 (with inner ends 36 and outer ends 38), strut rods 30 (with inner ends 40 and outer ends 42) and portions of center body 34. Vanes 28 can be made of a high strength material, such as aluminum (including aluminum alloys), a carbon epoxy composite or different materials depending on system requirements. Rods 30 can be made of a high-strength, low weight material, such as titanium or aluminum (including alloys).

Structural guide vanes 28 are connected to center body 34 at inner ends 36 and to outer casing 32 at outer ends 38. This connection can be through bolts or any other connection means to secure them on inner ends 36 and outer ends 38. Structural guide vanes 28 are swept back so that they are connected at inner ends 36 to center body 34 at a location closer to fan 12 than the connection to outer casing 32 at outer ends 38. Strut rods 30 are connected to center body 34 at inner ends 40 and to outer casing 32 at outer ends 42. These connections can be by bolts or another method known in the art.

In FIGS. 2A and 2B, rods 30 are connected in an A-frame arrangement so that outer ends 42 of two rods 30 connect to outer casing 32 at a point close together. This point is also at or near where structural guide vanes 28 are connected to outer casing 32 at outer ends 38. This embodiment contains three A-frame arrangements of strut rods 30, but different systems can have more or fewer A-frames depending on system requirements. Strut rods 30 can be aerodynamically shaped, for example, with a teardrop shaped cross section.

Structural guide vanes 28 are very thin, making them lightweight but susceptible to torsional winds and stresses from swirling fan air. Additionally, structural guide vanes 28 are susceptible to other catastrophic load conditions in an engine, such as the loss of a fan blade which may directly impact structural guide vanes 28 and/or may cause severe vibrations within the engine. By connecting outer ends 42 of strut rods 30 at locations close to outer ends 38 of guide vanes 28, strut rods 30 reinforce structural guide vanes 28, adding torsional stability and torsional rigidity for structural guide vanes 28. The insertion, placement and angles of strut rods 30 allows structural guide vanes 28 to withstand normal loading as well as many catastrophic loading conditions.

Additionally, the use of strut rods 30 allows for the placement of structural guide vanes 28 close to the fan to efficiently straighten air. Pressure pulsations arriving from rotation of upstream fan blades generate noise when they encounter structural guide vanes 28. The smaller the distance between fan blades and structural guide vanes 28, the louder the noise generated. This noise must be kept to a minimum, so sweeping structural guide vanes 28 reduces noise while allowing placement close to the fan. The sweep angle in structural guide vanes 28 combined with the placement and angle of strut rods 30 provide a wide base to distribute vertical loads and prevent bending loads in structural guide vanes 28 while allowing placement toward the front of the center body 34.

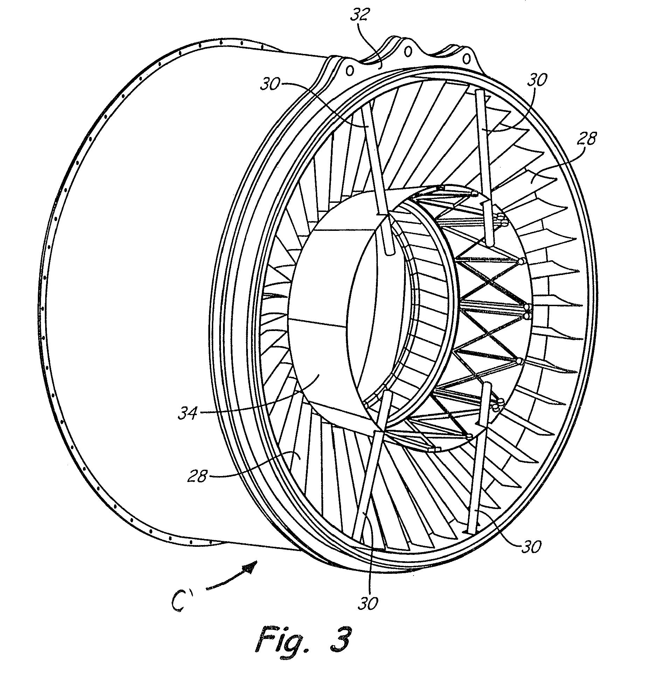

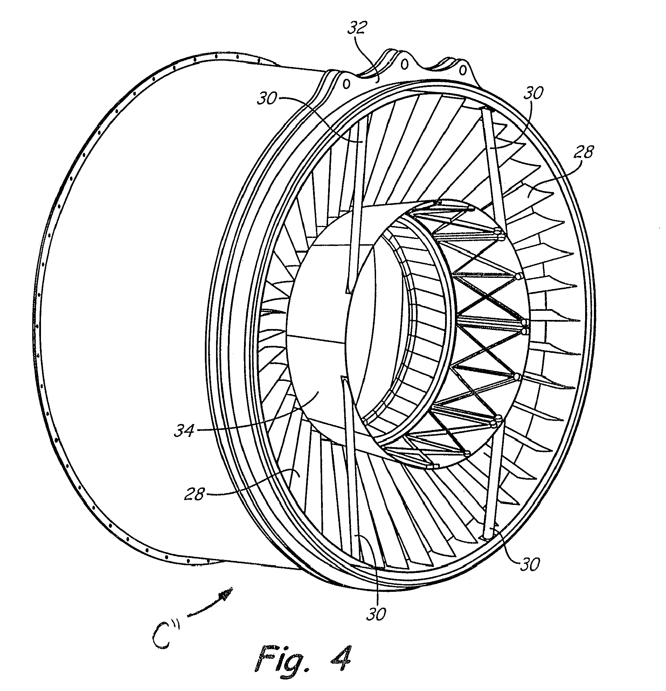

FIG. 3 is a perspective view of a back side of a second embodiment of fan exit case C'. FIG. 4 is a perspective view of a back side of a third embodiment of fan exit case C". FIGS. 3 and 4 include outer casing 32, guide vanes 28 (with inner ends 36 and outer ends 38), strut rods 30 (with inner ends 40 and outer ends 42), and center body 34. Structural guide vanes 28 are connected to center body 34 and to outer casing 32 and are swept back. Strut rods 30 are connected to center body 34 and to outer casing 32.

In these embodiments, rods 30 are connected in H-frame arrangements, forming a sort of "H" around center body 34. In FIG. 3, rods 30 are connected roughly vertically from side portions of center body 34 (not radially) to outer casing 32. In FIG. 4, rods 30 are connected tangentially to center body 34. Each of these arrangements connects strut rods 30 outer ends 42 at locations close to the connection of outer ends 38 of structural guide vanes 28. This allows strut rods 30 to add stability and torsional strength to structural guide vanes 28. It also allows structural guide vanes 28 to be swept back and still able to withstand engine loads while minimizing noise.

In summary, strut rods 30 are added to fan exit casing C, C', or C" to reinforce structural guide vanes 28, bringing additional torsional stability and torsional rigidity to vanes 28. Strut rods 30 connect at outer ends 42 to outer casing 32 at locations close to outer end 38 connections of structural guide vanes 28 to outer casing 32. This allows structural guide vanes 28 to stay thin and light weight while ensuring they are strong enough to endure engine loads, including normal loads from airflow from a fan or loads from catastrophic events such as a fan blade loss. Strut rods 30 are connected to center body 34 and to outer casing 32 at specific positions to reinforce structural guide vanes 28, allowing structural guide vanes 28 to be swept back, keeping the center body 34 connection near the fan while minimizing noise generated from a close connection.

While the placement of structural guide vanes and strut rods has been shown in three embodiments (A-frame and two variations of H-frames), strut rods can be placed in different positions and at different angles to reinforce and add torsional stability and torsional rigidty to the structural guide vanes. The only requirement is that they are not extending out radially from the center body to ensure that they can take torsional loads. While the invention has been shown with individual structural guide vanes, the structural guide vanes can be arranged in multipacks, with two or more vanes made integral to each other.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims, which define the invention.

## Claims

1. A reinforced structural guide vane system comprising:
an outer casing (32);
a center body (34) within the outer casing;
a plurality of structural guide vanes (28) extending between and connected to the center body and the outer casing; and
a plurality of strut rods (30) extending between and connected to the outer casing and the center body, wherein the plurality of strut rods extend non-radially between the outer casing and the centre body.

2. The reinforced structural guide vane system of claim 1, wherein the plurality of structural guide vanes are swept.

3. The reinforced structural guide vane system of claim 2, wherein the plurality of structural guide vanes are swept back from the center body to the outer casing.

4. The reinforced structural guide vane system of claim 1, 2 or 3, wherein outer ends (38) of the plurality of structural guide vanes are connected to the outer casing at locations close to where outer ends (42) of the plurality of strut rods are connected to the outer casing.

5. The reinforced structural guide vane system of claim 1, 2 or 3, wherein the plurality of structural guide vanes connect to the plurality of strut rods at the outer casing.

6. The reinforced structural guide vane system of any preceding claim, wherein the system comprises four strut rods.

7. The reinforced structural guide vane system of any preceding claim, wherein the plurality of strut rods connect to the center body to form an H-frame.

8. The reinforced structural guide vane system of claim 6 or 7, wherein the plurality of strut rods connect to the center body tangentially.

9. The reinforced structural guide vane system of any of claims 1 to 5, wherein the plurality of strut rods form a plurality of A-frames.

10. The reinforced structural guide vane system of claim 9, wherein the plurality of strut rods form two or three A-frames.

11. The reinforced structural guide vane system of any preceding claim, wherein the outer casing is a fan case, preferably a fan exit case.

12. The reinforced structural guide vane system of any preceding claim, wherein the connections of the plurality of strut rods and plurality of structural guide vanes are closer together in an axial direction at the outer casing than at the center body.

13. The reinforced structural guide vane system of any preceding claim, wherein the plurality of strut rods are connected to the outer casing and to the center body with bolts.
